# EUROPEAN PATENT SPECIFICATION

(11) **EP 1 359 692 B1**
(45) Date of publication and mention of the grant of the patent: **22.12.2004**
(21) Application number: 02360246.9
(22) Date of filing: 26.08.2002
(51) Int. Cl.: H04J 14/02

(54) **Optical (de)multiplexing structure and method of (de)multiplexing optical signals**
Vorrichtung zum optischen (De-)multiplexen und Verfahren zum (De-)multiplexen von optischen Signalen
Structure de (dé)multiplexage optique et procédé de (dé)multiplexage de signaux optiques

(30) Priority: 30.04.2002 EP 02360138
(43) Date of publication of application: 05.11.2003
(73) Proprietor: ALCATEL, 75008 Paris (FR)
(72) Inventor: Charlet, Gabriel, 91190 Villiers-Le-Bacle (FR); Frignac, Yann, 75005 Paris (FR)
(74) Representative: Wetzel, Emmanuelle

(56) References cited:
- EP-A- 1 030 473
- WO-A-01/05082
- US-B1- 6 301 046

## Description

The present invention relates to an optical device for multiplexing or demultiplexing an optical signal, comprising:
- a first optical filter having a first input port, at least one first output port, and a first filtering characteristic with first passbands periodically spaced by a basspand spacing, wherein said first passbands each comprise a first passband shape and each are centered at a plurality of first center wavelengths,
- a second optical filter having a second input port, a second output port, and a second filtering characteristic with second passbands periodically spaced by the passband spacing, wherein said second passbands each comprise a second passband shape and each are centered at a plurality of second center wavelengths,
- wherein the first output port is coupled to the second input port for providing a cascaded filter structure, and
- wherein the first and second filtering characteristics differ in terms of their respective center wavelengths.

The invention further relates to a method of multiplexing or demultiplexing optical signals comprising a plurality of optical channels divided by different center wavelengths, said method comprising the steps of:
- filtering an optical signal with a first optical filter having a first filtering characteristic with first passbands periodically spaced by a passband spacing, wherein said first passbands each comprise a first passband shape and each are centered at a plurality of first center wavelengths, and
- filtering the optical signal from the output of the first optical filter with a second optical filter having a second filtering characteristic with second passbands periodically spaced by the passband spacing, wherein said second passbands each comprise a second passband shape and each are centered at a plurality of second center wavelengths,
- wherein the first and second filtering characteristics differ in terms of their respective center wavelengths.

Such a device and method are known from US 6,301,046 B1.

Optical Wavelength Division Multiplexing (WDM) and Dense Wavelength Division Multiplexing (DWDM) are becoming increasingly popular technologies in optical communication systems as a means to exploit available resources more efficiently. In WDM and DWDM communication systems, multiple optical signals are simultaneously transmitted over a single optical fiber. Each optical signal is associated with a predetermined carrier wavelength. In other words, multiple carrier wavelengths divide and separate the multiple optical signals into a plurality of separate communication channels.

At the transmitter side, the information to be transmitted is used to modulate the center wavelength signal of each communication channel used. Additionally, the communication channels, i.e. the modulated center wavelength signals, are combined into a combined optical signal for transmitting across the optical fiber. The process of combining is often referred to as multiplexing. A corresponding device is usually referred to as a multiplexer.

At the receiver side, the multiplexed communication channels, more precisely the multiplexed optical signals, have to be separated for further processing. The separation is generally referred to as de-multiplexing. A corresponding device is a de-multiplexer.

In general, any de-multiplexing device is also capable of multiplexing a plurality of signals, if it is operated in reverse direction. Mutatis mutandis, a multiplexer can generally be used as a de-multiplexer. Therefore, it is not distinguished here between a multiplexing and a de-multiplexing device, unless indicated otherwise, and the term (de-)multiplexing is used to indicate both characteristics.

Moreover, the de-multiplexing of optical signals can also be considered as a filtering process, as it is known from conventional communications technology. Consequently, the term "(de-)multiplexing", as it is used here in the context with the present invention, also encompasses a filtering device or process.

In optical communications technology, it is an interesting approach to use so-called vestigial side band (VSB) filtering in order to further increase the amount of information that can be transferred across an optical fiber. At the receiver side, a plurality of narrow-banded filters with asymmetric passbands is required for separating the optical signals associated with the different communication channels, i.e., in other words, in order to perform a VSB filtering or de-multiplexing. Presently, single channel filters are used for this purpose, such as Fiber Bragg Grating filters. While these filters provide sufficient results, a large amount of 80 filters are required for an 80 channel WDM system, for instance. It can be seen that it would be advantageous, if the amount of filters required for this purpose could be reduced.

Above-mentioned US 6,301,046 B1 discloses an interleaver/de-interleaver that is said to cause little or no dispersion of optical signals. This known interleaver/deinterleaver comprises a cascaded structure of two interleavers/deinterleavers in series. The cascaded structure is used to convert an optical input signal from 50 GHz passband spacings to 200 GHz passband spacings in a two stage conversion scheme. However, this reference does neither discuss nor indicate a periodical filtering structure having asymmetrical passbands.

Accordingly, it is an object of the present invention to provide a filtering structure (more generally a (de-)multiplexing structure) having asymmetrical passbands and being capable of filtering a plurality of optical signals without the need to provide filtering components for each separate channel.

According to one aspect of the invention, this object is achieved by the optical device mentioned at the outset, wherein the first and second filtering characteristics also differ in terms of their respective passband shapes, and wherein said first and second center wavelengths are offset with respect to each other by less than one half of the passband spacing.

According to another aspect of the invention, this object is achieved by a corresponding method.

The new method and structure employ a (de-)multiplexing of the optical signals in at least two consecutive stages. In a first stage, the optical signals are subjected to a first filtering characteristic which is defined by a first filter transfer function. The first filtering characteristic comprises periodically spaced first passbands, each having a first passband shape. It is preferred, if the first passband shape is a symmetrical one, because multi-channel optical filters having a symmetric filtering characteristic are readily available. For example, a Mach-Zehnder interferometer, as it is known to those skilled in the art, can advantageously be used as a first filtering stage. Due to the periodically spaced passbands of this filtering characteristic, a plurality of optical signals (multiple communication channels) can be processed with a single first stage device only.

In a second stage, the optical signals already filtered are subjected to a second filtering characteristic which differs in terms of respective passband shapes and in terms of respective center wavelengths. In other words, both the first and the second optical filter employ filtering characteristics with periodically spaced passbands. However, the passbands of the first and the second filter stage are shifted with respect to one another such that the respective center wavelengths are located at different positions. Moreover, the second optical filter employs passbands with a different but again preferably symmetric shape, such as flat top passbands according to a preferred embodiment. It should be noted, however, that other passband shapes can also be employed in general.

Due to the wavelengths shift mentioned above and the different passband shapes, the resulting filtering structure of this two-stage combination comprises periodically spaced passbands that are asymmetrical in shape. In particular, the resulting passbands have a steeper slope on one side of the resulting center wavelengths than on the other. Such an asymmetric characteristic is particularly useful in connection with VSB filtering.

The resulting asymmetric filtering characteristic is easily achieved for a plurality of communication channels but with a combination of few cascaded components only. Therefore, the new filtering structure can be manufactured in an easy and inexpensive manner. Commonly known and available components, such as Mach-Zehnder interferometers and flat top interleavers, can be employed.

The above-mentioned object is thereby completely achieved.

In a preferred refinement of the invention, the first and second filtering characteristics are selected from a group comprising flat top filtering characteristics, sinusoidal filtering characteristics, and Gaussian filtering characteristics.

The above filtering characteristics are not exclusive, i.e. further filtering characteristics might be employed, if appropriate. However, the above-mentioned filtering characteristics are readily available with components known to those skilled in the art. Additionally, it has turned out that especially a combination involving flat top filtering characteristics is well suited for the purpose of VSB filtering.

In another refinement of the invention, the first and second optical filters are optical interleavers each having a multiplexing port and at least two de-multiplexing ports.

Interleavers are well known in the art as optical (de-)multiplexing devices. The interleavers usually provide three terminals or ports, with one port acting as a multiplexing port and the two remaining ones as de-multiplexing ports. The interleaver combines (multiplexes) two signals provided at the two de-multiplexing ports, and it provides the combined signal at its multiplexing port. Vice versa, the interleaver demultiplexes a signal provided at its multiplexing port, and it provides the separated signals at its two de-multiplexing ports. Interleavers are readily available as optical components. They are well suited for the purpose of optical filtering in the context of the present invention, wherein one of the de-multiplexing ports can be left unused if not required otherwise. The new filtering structure can thus be implemented in a very cost-effective manner.

In another refinement, a third optical filter is provided having a third input port, a third output port, and a third filtering characteristic with periodically spaced third passbands, wherein said third passbands each comprise a third passband shape and each are centered a plurality of third center wavelengths, and wherein said third input port is coupled to another first output port of said first optical filter for providing two cascaded filter structures in parallel.

According to this refinement, two cascaded filter structures are implemented with only three optical filters, which is especially simple and cost-effective. The two cascaded structures in parallel can perfectly be used for processing even and odd channels of a complex, multi-channel optical signal. At the same time, the advantageous asymmetric filtering, as it is explained above, can easily be achieved. The structure according to this refinement is particularly useful, if a resulting filtering characteristic with asymmetrical passbands and a regular channel spacing is desired.

In a further refinement of the above-mentioned feature, the passbands in each of the second and third filtering characteristics are spaced apart one from the other by a constant passband spacing, and said second and third center wavelengths are offset with respect to each other by one half of said constant passband spacing.

According to this refinement, the passband gaps of the second and third filters are selected such that the passbands of the two filters complement each other, when they are combined by means of the first optical filter. This structure is particularly useful for processing even and odd channels of a complex multi-channel optical signal.

In another refinement of the invention, the filtering structure comprises a 3db coupler having a coupler input and two coupler outputs, and two cascaded filter structures each including the first and the second optical filter, wherein the two cascaded structures each are coupled to one of the two coupler outputs.

This refinement allows to implement a resulting filtering characteristic with irregular channel spacings and irregularly oriented asymmetrical passband shapes. In other words, the resulting filtering characteristic comprises a plurality of passbands which are irregularly spaced one from the other. One part of the passbands has a steeper slope on the left side of its corresponding center wavelength (i.e. effective for wavelengths below the center wavelengths), while another part of the passbands has its steeper slope on the right (i.e. effective for wavelengths exceeding the center wavelengths). The resulting filtering characteristic is particularly useful if a VSB filtering is applied at a receiver side only, with a non-regular wavelength spacing being used. In a particular embodiment, a 50/75 GHz spacing with a 43 Gbit/s NRZ (non-return to zero) format has been used with such kind of resulting filtering characteristic. In this particular case, as will be explained further below, the steep slopes of the resulting passbands are located alternating on the right and on the left side, respectively.

In another refinement, the filtering structure further comprises at least one (de-)multiplexer having a multiplexing port coupled to said second output port and a plurality of demultiplexing ports, said (de-)multiplexer comprising a fourth filtering characteristic with periodically spaced fourth passbands, wherein each said fourth passband is wider than each of the first and second passbands.

Preferably, the at least one (de-)multiplexer is implemented as an Arrayed Waveguide Grating (AWG). Adding such a kind of (de-)multiplexer allows to separate the plurality of communication channels one by one in an easy and cost-effective manner, while the asymmetric filtering characteristic achieved with the inventive cascaded structure is completely maintained.

It goes without saying that the features described above and those yet to be explained below can be used not only in the respective combinations indicated, but also in other combinations or in isolation, without leaving the scope of the present invention.

Further features and advantages of the invention can be taken from the subsequent description of preferred embodiments with respect to the drawings, where:
- Fig. 1: illustrates a first embodiment of a (de-)multiplexing structure involving two cascaded filter structures;
- Fig. 2: schematically shows the transfer functions (filtering characteristics) of the first and second optical filter in the (de-)multiplexing structure of Fig. 1;
- Fig. 3: schematically shows the transfer functions (filtering characteristics) of the first and a third optical filter in the (de-)multiplexing structure of Fig. 1;
- Fig. 4: shows the resulting filtering characteristic of the (de-)multiplexing structure of Fig. 1;
- Fig. 5: schematically shows a resulting filtering characteristic similar to that of Fig. 4 in comparison to a VSB spectrum of a multi-channel optical signal;
- Fig. 6: illustrates a second embodiment involving two cascaded filter structures according to the invention;
- Fig. 7: schematically shows the transfer function (filtering characteristic) of the first and second optical filter in the filtering structure of Fig. 6;
- Fig. 8: schematically shows the resulting filter characteristic; and
- Fig. 9: schematically illustrates the application of an asymmetrical, non-regularly spaced filtering structure for VSB filtering purposes.

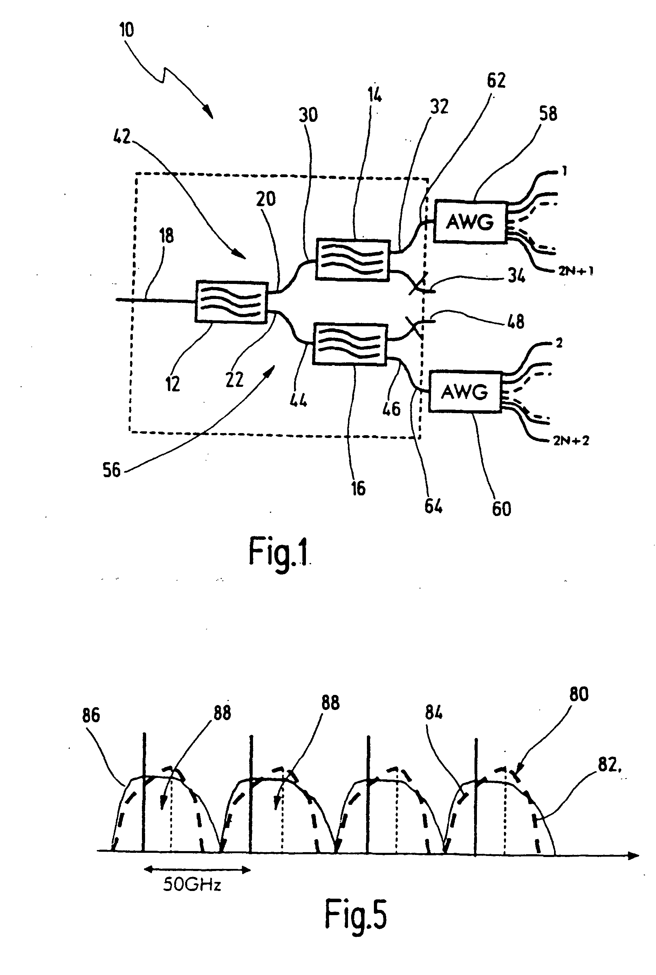

In Fig. 1, an embodiment of the new (de-)multiplexing structure is generally denoted by reference numeral 10.

The (de-)multiplexing structure 10 comprises a first optical filter 12, a second optical filter 14, and a third optical filter 16. All of these optical filters are implemented here as optical interleavers commonly known, although this is not mandatory, as will be acknowledged by those skilled in the art.

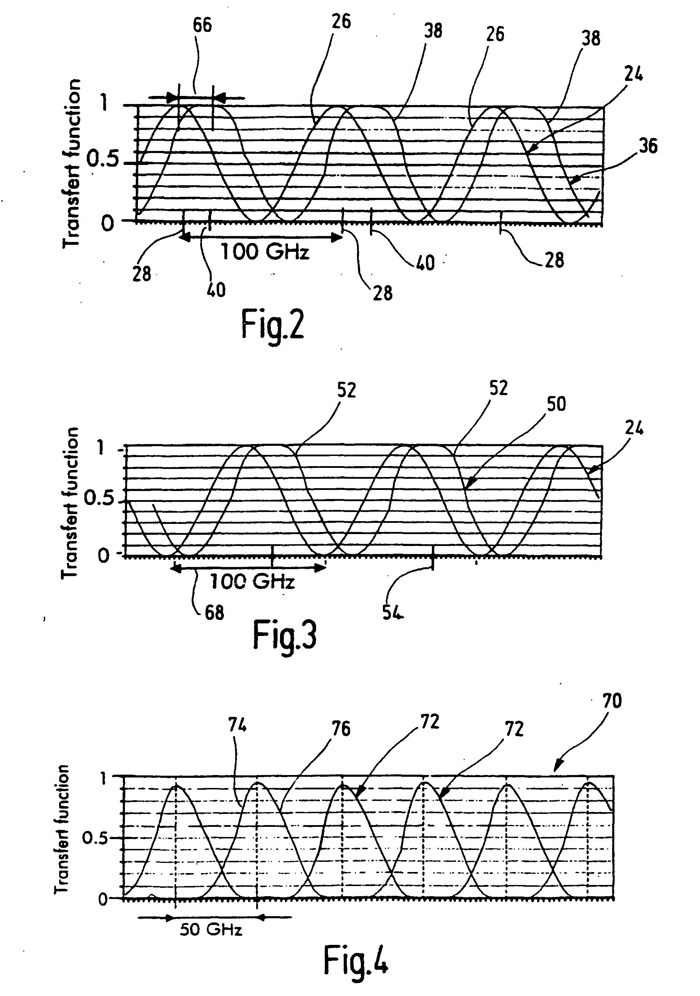

The first optical filter is a Mach-Zehnder interferometer here, also referred to as sinusoidal interleaver. It comprises a first input port 18 and two first output ports 20, 22. Additionally, it comprises a first filtering characteristic, which is denoted by reference numeral 24 in Fig. 2. As can be seen there, the first filtering characteristic 24 comprises a plurality of first passbands denoted by reference numerals 26. The first passbands are located at a plurality of first center wavelengths 28, and they are regularly spaced one from the other by a passband spacing of 100 GHz here.

The second optical filter 14 likewise comprises a second input port 30 and second output ports 32, 34. Likewise, the second optical filter 14 comprises a second filtering characteristic, which is denoted by reference numeral 36 in Fig. 2. As can be seen there, the second filtering characteristic 36 also comprises a plurality of passbands 38 which are located at a plurality of center wavelengths 40. The second filtering characteristic 36 and thus the second passbands 38 have a flat top. Correspondingly, the second optical filter is a flat top interleaver here.

The first optical filter 12 and the second optical filter 14 are connected to provide a cascaded filter structure 42, i.e. the first output port 20 of first optical filter 12 is connected to second input port 30 of second optical filter 14.

In a similar manner, third optical filter 16 comprises a third input port 44 and third output ports 46, 48. A third filtering characteristic of third optical filter 16 is depicted in Fig. 3 and denoted by reference numeral 50. Additionally, Fig. 3 also shows first filtering characteristic 24 in order to illustrate the relationship between first filtering characteristic 24 and third filtering characteristic 50. As can be seen from Fig. 3, third filtering characteristic 50 comprises a plurality of third passbands 52 located at center wavelengths 54. Third optical filter 16 is again a flat top interleaver. Correspondingly, third passbands 52 each comprise a flat top passband shape.

As can be seen from Fig. 1, the output port 22 of first optical filter 12 is connected to the third input port 46 of third optical filter 16. Thus, first optical filter 12 and third optical filter 16 also form a cascaded filter structure, which is denoted here by reference numeral 56.

According to a preferred embodiment, the (de-)multiplexing structure 10 is complemented here by two AWGs 58, 60. A first AWG 58 is connected with its multiplexing port 62 to second output port 32 of second optical filter 14. Likewise, AWG 60 is connected via its multiplexing port 64 to third output port 46 of third optical filter 16. Second output port 34 and third output port 48 of optical filters 14 and 16 are not connected and therefore not used. On the output side, the two AWGs 58, 60 each provide a plurality of output ports for the odd and even channels of a complex multiplexed optical signal (not shown here).

The filtering characteristics (transfer functions) of each AWG 58, 60 comprise a plurality of passbands (not shown here) which are much wider than the passbands 26, 38, 52 of optical filters 12, 14, 16. Thus, AWGs 58, 60 merely serve for (de-)multiplexing the optical signals without considerably affecting the resulting filtering characteristic explained below with reference to Figs. 2, 3, and 4.

As can be seen in Figs. 2 and 3, second filtering characteristic 36 and third filtering characteristic 50 each differ from first filtering characteristic 24 in terms of their respective passband shapes, and in terms of their respective center wavelengths. In other words, second filtering characteristic 36 is shifted with respect to first filtering characteristic 24 by a wavelength shift, which is denoted by reference numeral 66 in Fig. 2. Accordingly, first center wavelengths 28 and second center wavelengths 40 differ from one another. (For sake of completeness, it should be noted that the transfer functions are depicted here with a frequency scale at the abscissa. As will be appreciated by those skilled in the art, such an illustration is equivalent to one having wavelengths at the abscissa.)

The passband spacing between two consecutive passbands in each of filtering characteristics 24, 36, and 50 is 100 GHz here. The wavelength shift between both the second filtering characteristic 36 and the third filtering characteristic 50 seen with respect to first filtering characteristic 24 is less than one half of this passband spacing 68, i.e. less than 50 GHz.

On the other hand, second passbands 38 and third passbands 52 are shifted with respect to one another by one half of said passband spacing, i.e. by 50 GHz. The resulting filtering characteristic of the two cascaded filter structures 42, 56 is depicted in Fig. 4.

As can be seen in Fig. 4, the resulting filtering characteristic comprises a plurality of regularly spaced passbands 72 having an asymmetrical shape. In particular, the left slope 74 of each passband 76 is steeper than the corresponding right slope 76. The particular asymmetrical shape of resulting filtering characteristic 70 can be varied by changing the passband shapes of optical filters 12, 14, 16 involved, and by varying the wavelength shift 66 between the filtering characteristics of the first and second optical filter 12, 14 and the first and third optical filter 12, 16, respectively. As will be appreciated by those skilled in the art, a change of the passband shapes of the optical filters 12, 14, 16 involved can easily be achieved by selecting a different type of interleaver.

Although a preferred embodiment of the invention is explained here with common interleavers used as optical filters, it will be appreciated by those skilled in the art that other suitable optical filters can be employed instead. In particular, it is not required to use an optical filter component having more than two ports, as can be seen from non-connected output ports 34, 48.

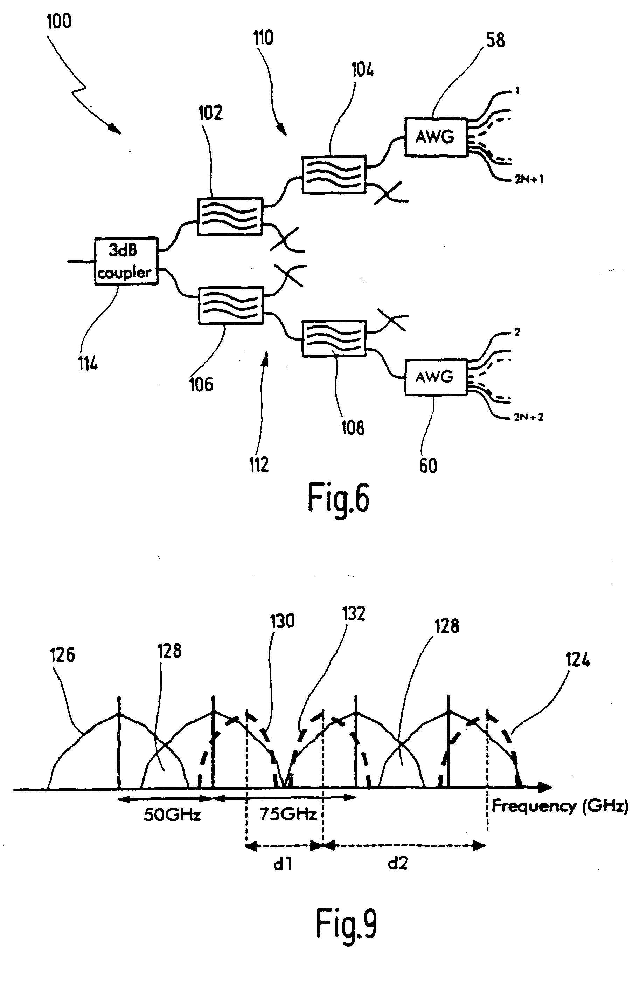

Fig. 5 schematically depicts an application of the new (de-)multiplexing structure 10 for use in connection with VSB filtering. A resulting filtering characteristic 80 is schematically shown in broken lines. The passbands of resulting filtering characteristic 80 are asymmetrical in shape, with the right slope 82 being steeper here than left slope 84. In thin and continuous lines, a VSB transmission spectrum is shown, designated by reference numeral 86. The transmission spectrum 86 comprises a plurality of communication channels 88. Due to the asymmetric shape of the passbands of resulting filtering characteristic 80, an advantageous VSB filtering can be achieved with a filtering structure like the one explained above.

In Fig. 6, a second preferred embodiment of a (de-)multiplexing structure is generally denoted by reference numeral 100.

The (de-)multiplexing structure 100 employs two cascaded filter structures comprising a first and a second optical filter. Like reference numerals are used to denote corresponding elements.

The (de-)multiplexing structure 100 comprises four optical filters denoted by reference numerals 102, 104, 106, and 108. An output port of optical filter 102 is connected to an input port of optical filter 104 thereby providing a first cascaded filter structure 110. Likewise, optical filters 106 and 108 are coupled to provide a second cascaded filter structure 112. One output of optical filter 104 is connected to a multiplexing input of an AWG 58. Likewise, one output of optical filter 108 is connected to a multiplexing input of an AWG 60. Both AWGs 58, 60 serve for (de-)multiplexing combined optical signals having a plurality of communication channels into single channels, as it is known to those skilled in the art. The passbands of both AWGs 58, 60 are much wider than the passbands of optical filters 102, 104, 106, 108.

Optical filters 102, 106 are connected in parallel to output ports of a 3db coupler 114. 3db coupler 114 serves as a signal splitter (or combiner depending on the direction used) that divides an incoming multiplexed signal into two cascaded filter structures 110, 112.

According to a preferred embodiment, optical filters 102, 106 are Mach-Zehnder interferometers each having a sinusoidal filtering characteristic. In contrast, optical filters 104, 108 are flat top interleavers here. Additionally, the filtering characteristics of optical filters 102, 104 and optical filters 106, 108, respectively, are shifted with respect to each other, as will be explained below.

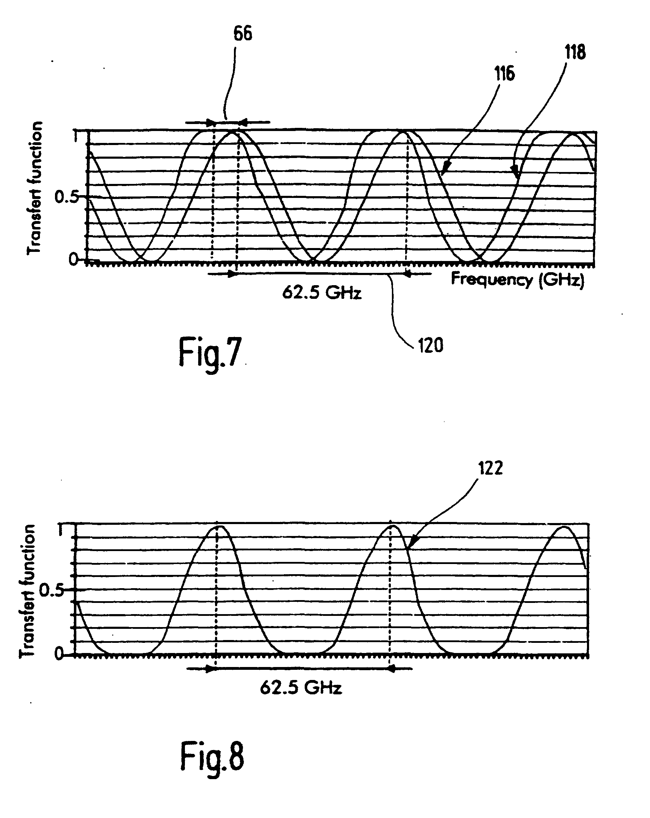

Figs. 7 and 8 depict filtering characteristics of optical filters 102, 104 as well as the resulting filtering characteristic of cascaded filter structure 110. In Fig. 7, reference numeral 116 denotes the sinusoidal filtering characteristic of optical filter 102, while reference numeral 118 denotes the flat top filtering characteristic of optical filter 104. Both filtering characteristics 116, 118 are offset with respect to their center wavelength of their passbands by a wavelength shift 66. The passband spacing 120 between two consecutive passbands in each of filtering characteristics 116, 118 is 62.5 GHz here.

Fig. 8 depicts the resulting filtering characteristic of cascaded filter structure 110, which is denoted by reference numeral 122. As can be seen, the passbands each have an asymmetrical shape depending on the wavelength shift 66 and the passband shapes of filter characteristics 116 and 118.

It goes without saying that cascaded filter structure 112 comprising optical filters 106, 108 provides a similar behavior, except that the resulting asymmetric filtering characteristic is shifted with respect to resulting filtering characteristic 122 by an amount of 12.5 GHz. The final resulting frequency characteristic of (de-)multiplexing structure 100 is schematically depicted in Fig. 9.

Fig. 9 schematically shows the resulting filtering characteristic 124 of (de-)multiplexing structure 100 in broken, fat lines. Additionally, a VSB spectrum with a non-regular wavelength spacing of 50/75 GHz is shown and denoted by reference numeral 126. As can be seen, the non-regular, asymmetrical filtering characteristic 124 is well suited to recover the information in non-deteriorated side bands of spectrum 126, while deteriorated side bands 128 are suppressed. A particular beneficial feature of resulting filtering characteristic 124 is the alternating asymmetrical orientation of the passbands, with steep slopes 130, 132 of two adjacent passbands facing each other. Thereby, a narrow-banded and sharp filtering can be achieved. The (de-)multiplexing structure 100 is thus well suited for use in a 43 Gbit/s NRZ format communication system with non-regular channel spacing of 50/75 GHz.

In the embodiments explained so far, the ports of the optical filters and AWGs have been designated as input ports and output ports with respect to an application, where the described structures operate as de-multiplexers. Those skilled in the art, however, will acknowledge that the structures disclosed can also be used as multiplexers. Therefore, the designation as "input port" and "output port", respectively, has been chosen merely for sake of simplicity, but it is not intended to be limiting.

## Claims

1. An optical device (42) for a multiplexing or demultiplexing device (10), comprising:
- a first optical filter (12; 102, 106) having a first input port (18), at least one first output port (20, 22), and a first filtering characteristic (24; 116) with first passbands (26) periodically spaced by a passband spacing (120), wherein said first passbands (26) each comprise a first passband shape and each are centered at a plurality of first center wavelengths (28),
- a second optical filter (14; 104, 108) having a second input port (30), a second output port (32, 34), and a second filtering characteristic (36; 118) with second passbands (38) periodically spaced by the passband spacing (120), wherein said second passbands (38) each comprise a second passband shape and each are centered at a plurality of second center wavelengths (40),
- wherein the first output port (20, 22) is coupled to the second input port (30) for providing a cascaded filter structure (42; 110, 112), and
- wherein the first and second filtering characteristics (24, 36; 116, 118) differ in terms of their respective center wavelengths (28, 40),
**characterized in that** the first and second filtering characteristics (24, 36; 116, 118) also differ in terms of their respective passband shapes, and said first and second center wavelengths (28, 40) are offset (66) with respect to each other by less than one half of the passband spacing.

2. The device of claim 1, wherein the first and second filtering characteristics (24, 36; 116, 118) are selected from a group comprising flat top filtering characteristics, sinusoidal filtering characteristics, and Gaussian filtering characteristics.

3. The device of claim 1, wherein said first (12; 102, 106) and second (14; 104, 108) optical filters are optical interleavers each having a multiplexing port (18; 30) and at least two de-multiplexing ports (20, 22; 46, 48).

4. The device of claim 1, further comprising a third optical filter (16) having a third input port (44), a third output port (46, 48), and a third filtering characteristic (50) with third passbands (52) periodically spaced by the passband spacing (120), wherein said third passbands (52) each comprise a third passband shape and each are centered at a plurality of third center wavelengths (54), and wherein said third input port (44) is coupled to a another first output port (22) of said first optical filter (12) for providing two cascaded filter structures (42, 56) in parallel.

5. The device of claim 4, wherein said second and third center wavelengths (40, 54) are offset with respect to each other by one half of said passband spacing.

6. The device of claim 1, further comprising a 3db coupler (114) having a coupler input and two coupler outputs, and further comprising two cascaded filter structures (110, 112) each including the first (102, 106) and the second (104, 108) optical filter, wherein the two cascaded structures (110, 112) are each coupled to one of the two coupler outputs.

7. The device of claim 1, further comprising at least one de-multiplexer (58, 60) having a multiplexing port (62, 64) coupled to said second output port (32, 46) and a plurality of demultiplexing ports, said de-multiplexer comprising a fourth filtering characteristic with periodically spaced fourth passbands, wherein each of said fourth passbands is wider than each of the first and second passbands.

8. A method of filtering optical signals comprising a plurality of optical channels divided by different center wavelengths (28, 40, 54), said method comprising the steps of:
- filtering an optical signal with a first optical filter (12; 102, 106) having a first filtering characteristic (24; 116) with first passbands (26) periodically spaced by a passband spacing (120), wherein said first passbands (26) each comprise a first passband shape and each are centered at a plurality of first center wavelengths (28), and
- filtering the optical signal from the output of the first optical filter (12; 102; 106) with a second optical filter (14; 16; 104, 108) having a second filtering characteristic (36; 50; 118) with second passbands (38; 52) periodically spaced by the passband spacing (120), wherein said second passbands (38; 52) each comprise a second passband shape and each are centered at a plurality of second center wavelengths (40; 54),
- wherein the first and second filtering characteristics (24, 36; 24, 50) differ in terms of their respective center wavelengths (28, 40; 28, 54),
**characterized in that** the first and second filtering characteristics (24, 36; 116, 118) also differ in terms of their respective passband shapes, and said first and second center wavelengths (28, 40) are offset (66) with respect to each other by less than one half of the passband spacing.

9. Use of the device according to any of claims 1 to 7 or the method according to Claim 8 for vestigial side band filtering in a communication system involving optical transmission of digital signals.

## Patentansprüche

1. Optisches Gerät (42) für eine Multiplex- oder Demultiplex-Gerät (10), beinhaltend
- ein erstes optisches Filter (12; 102, 106) mit einem ersten Eingangsport (18), mindestens einem ersten Ausgangsport (20, 22) und einer ersten Filtercharakteristik (24; 116) mit ersten Bandpässen (26), die um einen Bandpaßabstand (120) in gleichmäßigen Intervallen verteilt sind, wobei die besagten ersten Bandpässe (26) jeweils eine erste Bandpaßform aufweisen und jeweils um mehrere erste Mittenwellenlängen (28) zentriert sind,
- ein zweites optisches Filter (14; 104, 108) mit einem zweiten Eingangsport (30), einem zweiten Ausgangsport (32, 34) und einer zweiten Filtercharakteristik (36; 118) mit zweiten Bandpässen (38), die um den Bandpaßabstand (120) in gleichmäßigen Intervallen verteilt sind, wobei die besagten zweiten Bandpässe (38) jeweils eine zweite Bandpaßform aufweisen und jeweils um mehrere zweite Mittenwellenlängen (40) zentriert sind,
- wobei der erste Ausgangsport (20, 22) mit dem zweiten Eingangsport (30) gekoppelt ist, um eine kaskadierte Filterstruktur (42; 110, 112) zu realisieren, und
- wobei sich die ersten und zweiten Filtercharakteristiken (24; 36; 116; 118) hinsichtlich ihrer jeweiligen Mittenwellenlängen (28; 40) unterscheiden,
**dadurch gekennzeichnet, daß** sich die ersten und zweiten Filtercharakteristiken (24; 36; 116; 118) außerdem hinsichtlich auf ihre jeweiligen Bandpaßformen unterscheiden, und daß die besagten ersten und zweiten Mittenwellenlängen (28, 40) gegeneinander um weniger als die Hälfte des Bandpaßabstands versetzt sind (66).

2. Gerät nach Anspruch 1, wobei die ersten und zweiten Filtercharakteristiken (24; 36; 116; 118) aus einer Gruppe ausgewählt werden, die Flat-Top-Filtercharakteristiken, sinusförmige Filtercharakteristiken und Gaußsche Filtercharakteristiken beinhaltet.

3. Gerät nach Anspruch 1, wobei die besagten ersten (12; 102, 106) und zweiten (14; 104, 108) optischen Filter optische Interleaver mit jeweils einem Multiplex-Port (18; 30) und mindestens zwei Demultiplex-Ports (20, 22; 46, 48) sind.

4. Gerät nach Anspruch 1, ferner beinhaltend ein drittes optisches Filter (16), das einen dritten Eingangsport (44), einen dritten Ausgangsport (46, 48) und eine dritte Filtercharakteristik (50) aufweist, bei welcher dritte Bandpässe (52) im Bandpaßabstand (120) in regelmäßigen Intervallen verteilt sind, wobei die besagten dritten Bandpässe (52) jeweils einen dritten Durchlaßkurvenverlauf haben und jeweils bei mehreren dritten Mittenwellenlängen (54) zentriert sind, und wobei der besagte dritte Eingangsport (44) mit einem weiteren ersten Ausgangsport (22) des besagten ersten optischen Filters (12) gekoppelt ist, so daß zwei kaskadierte Filterstrukturen (42, 56) parallel entstehen.

5. Gerät nach Anspruch 4, wobei die besagten zweiten und dritten Mittenwellenlängen (40, 54) um die Hälfte des besagten Bandpaßabstands gegeneinander versetzt sind.

6. Gerät nach Anspruch 1, ferner beinhaltend einen 3-dB-Koppler (114) mit einem Kopplereingang und zwei Kopplerausgängen, weiterhin zwei kaskadierte Filterstrukturen (110, 112), die jeweils das erste (102, 106) und das zweite (104, 108) optische Filter beinhalten, wobei die beiden kaskadierten Strukturen (110, 112) jeweils mit einem der beiden Kopplerausgänge gekoppelt sind.

7. Gerät nach Anspruch 1, ferner beinhaltend mindestens einen Demultiplexer (58, 60) mit einem Multiplex-Port (62, 64), der an den besagten zweiten Ausgangsport (32, 46) angeschlossen ist, weiterhin mehrere Demultiplex-Ports, wobei der besagte Demultiplexer eine vierte Filtercharakteristik mit in gleichen Intervallen verteilten Bandpässen hat, und wobei jeder besagte Bandpaß breiter als jeder der ersten und zweiten Bandpässe ist.

8. Verfahren zum Filtern optischer Signale, beinhaltend mehrere optische Kanäle, die durch unterschiedliche Mittenwellenlängen (28, 40, 54) unterteilt sind, wobei das besagte Verfahren die Schritte beinhaltet,
- ein optisches Signal mit einem ersten optischen Filter (12; 102, 106) zu filtern, welches eine erste Filtercharakteristik (24; 116) mit ersten Bandpässen (26) aufweist, die in gleichmäßigen Intervallen verteilt und durch einen Bandpaßabstand (120) voneinander getrennt sind, wobei die besagten ersten Bandpässe (26) jeweils eine erste Bandpaßform haben und jeweils bei mehreren ersten Mittenwellenlängen (28) zentriert sind, und
- das vom Ausgang des ersten optischen Filters (12; 102, 106) kommende optische Signal mit einem zweiten optischen Filter (12; 16; 104, 108) zu filtern, welches eine zweite Filtercharakteristik (36; 50; 118) mit zweiten Bandpässen (38; 52) aufweist, die in gleichmäßigen Intervallen verteilt und durch den Bandpaßabstand (120) voneinander getrennt sind,
wobei die besagten zweiten Bandpässe (38; 52) jeweils eine zweite Bandpaßform haben und jeweils bei mehreren zweiten Mittenwellenlängen (40; 54) zentriert sind,
- wobei sich die ersten und zweiten Filtercharakteristiken (24, 36; 24, 50) im Hinblick auf ihre jeweiligen Mittenwellenlängen (28, 40; 28, 54) unterscheiden,
**dadurch gekennzeichnet, daß** sich die ersten und zweiten Filtercharakteristiken (24, 36; 116, 118) zudem im Hinblick auf ihre jeweiligen Bandpaßformen unterscheiden, und daß die besagten ersten und zweiten Mittenwellenlängen (28, 40) gegeneinander um weniger als die Hälfte des Bandpaßabstands versetzt sind (66).

9. Verwendung des Geräts gemäß einem oder mehreren der Ansprüche 1 bis 7 oder Verfahren gemäß Anspruch 8 für eine Restseitenbandfilterung in einem Kommunikationssystem mit optischer Übertragung von digitalen Signalen.

## Revendications

1. Dispositif optique (42) pour un dispositif de multiplexage ou démultiplexage (10), comprenant :
- un premier filtre optique (12 ; 102, 106) possédant un premier point d'accès d'entrée (18), au moins un premier point d'accès de sortie (20, 22), et une première caractéristique de filtrage (24 ; 116) avec des premières bandes passantes (26) espacées périodiquement par un espacement de bandes passantes (120), dans lequel lesdites premières bandes passantes (26) comprennent chacune une première forme de bande passante et chacune est centrée sur une pluralité de premières longueurs d'ondes centrales (28),
- un deuxième filtre optique (14 ; 104, 108) possédant un deuxième point d'accès d'entrée (30), un deuxième point d'accès de sortie (32, 34), et une deuxième caractéristique de filtrage (36 ; 118) avec des deuxièmes bandes passantes (38) espacées périodiquement par l'espacement de bande passante (120), dans lequel lesdites deuxièmes bandes passantes (38) comprennent chacune une deuxième forme de bande passante et chacune est centrée sur une pluralité de deuxièmes longueurs d'ondes centrales (40),
- dans lequel le premier point d'accès de sortie (20, 22) est couplé au deuxième point d'accès d'entrée (30) afin de fournir une structure de filtre en cascade (42 ; 110, 112), et
- dans lequel les premières et deuxièmes caractéristiques de filtrage (24, 36 ; 116, 118) diffèrent pour ce qui est de leurs longueurs d'ondes centrales respectives (28, 40),
**caractérisé en ce que** les premières et secondes caractéristiques de filtrage (24, 36; 116, 118) diffèrent également pour ce qui est de leurs formes respectives de bandes passantes, et lesdites premières et deuxièmes longueurs d'ondes centrales (28, 40) sont décalées (66) l'une par rapport à l'autre par moins de la moitié de l'espacement de bande passante.

2. Dispositif selon la revendication 1, dans lequel les premières et deuxièmes caractéristiques de filtrage (24, 36 ; 116, 118) sont sélectionnées parmi un groupe comprenant des caractéristiques de filtrage à sommet plat, des caractéristiques de filtrage sinusoïdal, et des caractéristique de filtrage Gaussien.

3. Dispositif selon la revendication 1, dans lequel lesdits premiers (12 ; 102, 106) et deuxièmes (14 ; 104, 108) filtres optiques sont des dispositifs d'entremêlement optique possédant chacun un point d'accès de multiplexage 5 (18 ; 30) et au moins deux points d'accès de démultiplexage (20, 22 ; 46, 48).

4. Dispositif selon la revendication 1, comprenant en outre un troisième filtre optique (16) possédant un troisième point d'accès d'entrée (44), un troisième point d'accès de sortie (46, 48), et une troisième caractéristique de filtrage (50) avec une troisième bande passante (52) espacée périodiquement par l'espacement de bande passante (120), dans lequel lesdites troisièmes bandes passantes (52) comprennent chacune une troisième forme de bande passante et chacune est centrée sur une pluralité de troisièmes longueurs d'ondes centrales (54), et dans lequel ledit troisième point d'accès d'entrée (44) est couplé à un autre premier point d'accès de sortie (22) dudit premier filtre optique (12) afin de fournir deux structure.

5. Dispositif selon la revendication 4, dans lequel lesdites deuxièmes et troisièmes longueurs d'ondes centrales (40, 54) sont décalées l'une par rapport à l'autre par la moitié dudit espacement de bande passante.

6. Dispositif selon la revendication 1, comprenant en outre un coupleur 3db (114) possédant une entrée de coupleur et deux sorties de coupleur, et comprenant en outre deux structures de filtre en cascade (110, 112) comprenant chacune le premier (102, 106) et le deuxième (104, 108) filtres optiques dans lesquels les deux structures en cascade (110, 112) sont chacune couplées à l'une des deux sorties de coupleur.

7. Dispositif selon la revendication 1, comprenant en outre au moins un démultiplexeur (58, 60) possédant un point d'accès de multiplexage (62, 64) couplé audit deuxième point d'accès de sortie (32, 46) et une pluralité de points d'accès de démultiplexage, ledit démultiplexeur comprenant une quatrième caractéristique de filtrage avec des quatrièmes bandes passantes espacées périodiquement, dans lequel chacune desdites quatrièmes bandes passantes est plus large que chacune parmi les premières et deuxièmes bandes passantes.

8. Procédé de filtrage de signaux optiques comprenant une pluralité de canaux optiques divisés par des longueurs d'ondes centrales différentes (28, 40, 54), ledit procédé comprenant les étapes consistant à :
- filtrer un signal optique avec un premier filtre optique (12 ; 102, 106) possédant une première caractéristique de filtrage (24 ; 116) avec les premières bandes passantes (26) espacées périodiquement par un espacement de bande passante (120), dans lequel lesdites premières bandes passantes (26) comprennent chacune une première forme de bande passante et chacune est centrée sur une pluralité de premières longueurs d'ondes centrales (28), et
- filtrer le signal optique depuis la sortie du premier filtre optique (12 ; 102 ; 106) avec un deuxième filtre optique (14 ; 16 ; 104 ; 108) possédant une deuxième caractéristique de filtrage (36 ; 50 ; 118) avec des deuxièmes bandes passantes (38 ; 52) espacées périodiquement par l'espacement de bande passante (120), dans lequel lesdites deuxièmes bandes passantes (38 ; 52) comprennent chacune une deuxième forme de bande passante et chacune est centrée sur une pluralité de deuxièmes longueurs d'ondes centrales (40 ; 54),
- dans lequel les premières et deuxièmes caractéristiques de filtrage (24, 36 ; 24, 50) diffèrent pour ce qui est de leur longueurs d'ondes centrales respectives (28, 40 ; 28, 54),
**caractérisé en ce que** les premières et deuxièmes caractéristiques de filtrage (24, 36; 116, 118) diffèrent également pour ce qui est de leurs formes de bande passante respectives, et lesdites premières et deuxièmes longueurs d'ondes centrales (28, 40) sont décalées (66) l'une par rapport à l'autre par moins de la moitié de l'espacement de bande passante.

9. Utilisation du dispositif selon l'une quelconque des revendications 1 à 7 ou du procédé selon la revendication 8 pour un filtrage de bande latérale résiduelle dans un système de communication impliquant une transmission optique de signaux numériques.
